(19) Europäisches Patentamt
European Patent Office
Office européen des brevets

(11) **EP 1 918 766 A1**

(12) **EUROPEAN PATENT APPLICATION**
published in accordance with Art. 153(4) EPC

(43) Date of publication:
**07.05.2008 Bulletin 2008/19**

(51) Int Cl.:
*G02F 1/1335* (2006.01)    *G02B 3/00* (2006.01)
*G02B 3/06* (2006.01)    *G09F 9/00* (2006.01)

(21) Application number: **06767995.1**

(22) Date of filing: **07.07.2006**

(86) International application number:
**PCT/JP2006/313585**

(87) International publication number:
**WO 2007/010764 (25.01.2007 Gazette 2007/04)**

(84) Designated Contracting States:
**DE FR**

(30) Priority: **20.07.2005 JP 2005210003**

(71) Applicant: **Sharp Kabushiki Kaisha
Osaka-shi, Osaka 545-8522 (JP)**

(72) Inventors:
• **IKUTA, Kazuya
Tenri-shi Nara 632-0004 (JP)**

• **OKADA, Kuniaki
Tenri-shi, Nara 632-0033 (JP)**

(74) Representative: **Zinke, Thomas
Müller Hoffmann & Partner
Patentanwälte
Innere Wiener Straße 17
D-81667 München (DE)**

(54) **LIQUID CRYSTAL DISPLAY PANEL WITH MICROLENS AND PROCESS FOR PRODUCING THE SAME**

(57)    A process for producing a liquid crystal display panel with microlens, including: the step of preparing a liquid crystal display panel; forming a resin layer (9) of uncured photo-curing resin, on a surface of a first transparent substrate 2 of the liquid crystal display panel; irradiating a plurality of pixels with light having a property of curing the resin layer (9) with varying incident angle, and partially exposing the resin layer (9) by the light passed through a first sub-pixel (6B); and following the exposure step, the step of development of removing an uncured portion of the resin layer (9); wherein the exposure step is performed such that the cured portion has a shape of cylindrical microlens, and maximum thickness of the cured portion becomes equal to the thickness of the resin layer.

FIG.2

**Description**

TECHNICAL FIELD

The present invention relates to a liquid crystal display panel with microlens and a process for producing the same.

BACKGROUND ART

In a non-spontaneous emission type display device as represented by a liquid crystal display device, generally, transmittance or reflectance of a display panel is changed by a driving signal and intensity of light from a light source directed to the display panel is modulated, whereby images and characters are displayed. The display device of this type includes a direct-view type display device in which images and the like displayed on the display panel are directly observed, and a projection type display device (projector) which projects images and the like displayed on the display panel enlarged on a screen, using a projection lens.

A display panel used in a liquid crystal display device is referred to as a liquid crystal display panel. Besides the liquid crystal display panel, an electro-chromic display panel, an electrophoretic display panel, a toner display panel and a PLZT panel have been known as non-spontaneous emission type display panels.

At present, a liquid crystal display device is widely used in monitors, projectors, portable information terminals, portable telephones and the like. In a liquid crystal display device, driving voltages corresponding to image signals are respectively applied to pixels arranged regularly in a matrix, whereby optical characteristic of liquid crystal layer in each pixel area is changed, to display images or characters. As a method of applying independent driving voltage to the pixel described above, simple matrix method and active matrix method have been known. On an active-matrix type liquid crystal display panel, a switching element and wiring for supplying driving voltage to a pixel electrode must be provided. As the switching element, a non-linear 2-terminal element such as an MIM (Metal-Insulator-Metal) element or a 3-terminal element such as a TFT (Thin Film Transistor) element is used.

When the switching element (particularly a TFT element) provided on the liquid crystal display device receives strong incident light, element resistance in an OFF state lowers. Then, charges stored in sub-pixel capacitance when voltage is applied are undesirably discharged in the OFF state, and prescribed display state cannot be attained. As a result, even when the corresponding pixel should originally be displayed as "black", perfect "black" cannot be realized because of light leakage and, consequently, contrast ratio lowers.

In view of the foregoing, in the liquid crystal display panel, in order to prevent entrance of light to the TFT element (particularly to the channel region), a light shielding layer (also referred to as a "black matrix") is provided on a TFT substrate on which TFTs and pixel electrodes are formed or on a counter substrate facing the TFT substrate with a liquid crystal layer interposed. In a reflection type liquid crystal display device, effective pixel area is not decreased when a reflecting electrode is used as the light shielding layer, while in a transmissive liquid crystal display device utilizing transmitted light for display, effective pixel area decreases when the light shielding layer is provided in addition to TFT elements, gate bus line and source bus line that do not transmit light and, hence, the ratio of effective pixel area to the total area of display region, that is, aperture, lowers.

This tendency becomes more noticeable as the liquid crystal display panel comes to have higher definition and smaller size. The reason for this is that TFT elements, bus line and the like can not be made smaller than a certain size because of limitations in electrical performance or manufacturing technique. Particularly in a type of semi-transmissive liquid crystal display device widely used as a display device for mobile equipment such as portable telephones, each individual pixel has an area that displays in reflection mode (reflection area) and an area that displays in transmission mode (transmission area) and, therefore, if the pixel pitch is made smaller, the ratio of transmission area to the total display area (the ratio of aperture of transmission area) decreases significantly. The semi-transmissive liquid crystal display device displays using backlight passing through the liquid crystal display panel if illumination is dark, and displays by reflecting light from surroundings when illumination is bright. Therefore, it realizes display of high contrast ratio regardless of surrounding brightness, while luminance lowers when the aperture of transmission area becomes smaller.

As a method of improving use efficiency of light, in a projection type liquid crystal display device, a method has been practically applied in which a microlens for collecting light is provided on each pixel of the liquid crystal display panel to increase effective aperture of the liquid crystal display panel. Most of the conventional microlenses have been formed on the counter substrate of liquid crystal display panel, in a sandwich structure with the microlens positioned between two glass plates. A plurality of microlenses arranged regularly are, as a whole, sometimes referred to as a "microlens array."

Japanese Patent Laying-Open No. 2002-62818 (Patent Document 1) discloses a process for forming microlenses in self-alignment to pixels, by exposing photo-sensitive material applied to the surface of the counter substrate, utilizing pixels of the liquid crystal display panel. According to this process, misalignment between the pixel and the microlens can be avoided and, in addition, microlenses can advantageously be manufactured at a low cost.
Patent Document 1: Japanese Patent Laying-Open No. 2002-62818

DISCLOSURE OF THE INVENTION

PROBLEMS TO BE SOLVED BY THE INVENTION

The process described in Patent Document 1 above uses ultraviolet ray for exposing the photosensitive material. Therefore, it is applicable to a display panel not having any color filter (for example, a liquid crystal display panel for 3CCD type projector), while it is not applicable to a display panel with color filters, as the color filters absorb ultraviolet ray.
Therefore, an object of the present invention is to provide a process for producing a liquid crystal display panel with microlens applicable even to a liquid crystal display panel having color filters, as well as to provide the liquid crystal display panel with microlens readily produced by such a process.

MEANS FOR SOLVING THE PROBLEMS

In order to attain the above-described object, the present invention provides a process for producing a liquid crystal display panel with microlens, including: the step of preparing a liquid crystal display panel including first and second transparent substrates adhered to each other with a liquid crystal layer interposed, having a plurality of pixels allowing passage of light and defined by separation by a light shielding portion, each of the plurality of pixels including a plurality of sub-pixels including a first sub-pixel passing light of a first color, and a second sub-pixel passing light of a second color different from the first color, the first sub-pixel having highest transmittance of light that has a property of curing a photo-curing resin among the plurality of sub-pixels; the step of forming a resin layer of uncured photo-curing resin, on a surface of the first transparent substrate; the exposure step of irradiating the plurality of pixels with light having the property of curing the resin layer with varying incident angle, and partially exposing the resin layer by the light passed through the first sub-pixel; and the step of development following the exposure step, of removing an uncured portion of the resin layer; wherein the exposure step is performed such that the cured portion has a shape of cylindrical microlens, and maximum thickness of the cured portion becomes equal to thickness of the resin layer.

EFFECTS OF THE INVENTION

According to the present invention, even when the object liquid crystal display panel has color filters, the liquid crystal display panel with microlens can be produced in a simple manner.

BRIEF DESCRIPTION OF THE DRAWINGS

Fig. 1 illustrates a relation between glass substrate thickness and range of exposure of irradiating light exposing a photo-curing resin layer.
Fig. 2 (a) illustrates partial curing of a resin layer exposed from below when a transparent substrate is thin, and (b) illustrates accumulated amount of exposure when the transparent substrate is thin.
Fig. 3 (a) illustrates partial curing of a resin layer exposed from below when a transparent substrate is thick, and (b) illustrates accumulated amount of exposure when the transparent substrate is thick.
Fig. 4 shows a concept of the liquid crystal display device having a liquid crystal display panel with microlens in accordance with Embodiment 1 of the present invention.
Fig. 5 is a partial enlarged view of a microlens array provided on the liquid crystal display panel with microlens in accordance with Embodiment 1 of the present invention.
Fig. 6 shows a first step of the process for producing the liquid crystal display panel with microlens in accordance with Embodiment 1 of the present invention.
Fig. 7 is an enlarged plan view of one pixel of the liquid crystal display panel with microlens in accordance with Embodiment 1 of the present invention.
Fig. 8 is an enlarged plan view of nine pixels of the liquid crystal display panel with microlens in accordance with Embodiment 1 of the present invention.
Fig. 9 shows a second step of the process for producing the liquid crystal display panel with microlens in accordance with Embodiment 1 of the present invention.
Fig. 10 is a cross-sectional view taken along the line X-X of Fig. 8.
Fig. 11 is a cross-sectional view taken along the line XI-XI of Fig. 8.

Fig. 12 shows a manner of scanning performed in the process for producing the liquid crystal display panel with microlens in accordance with Embodiment 1 of the present invention.

Fig. 13 (a) illustrates how a ridge without any recess or protrusion is formed by partial curing of a resin layer exposed from below, and (b) illustrates accumulated amount of exposure.

Fig. 14 (a) illustrates how a ridge without any recess or protrusion is formed utilizing entire thickness of the resin layer exposed from below, and (b) illustrates accumulated amount of exposure.

Fig. 15 (a) illustrates how a ridge with a protrusion is to be formed by exposure from below and how the protrusion eventually comes to have a cut-out shape as the thickness of protrusion exceeds resin thickness, and (b) illustrates accumulated amount of exposure.

Fig. 16 shows a third step of the process for producing the liquid crystal display panel with microlens in accordance with Embodiment 1 of the present invention.

Fig. 17 shows a fourth step of the process for producing the liquid crystal display panel with microlens in accordance with Embodiment 1 of the present invention.

DESCRIPTION OF THE REFERENCE SIGNS

1 microlens, 1a flat surface, 2 TFT substrate, 3 counter substrate, 4 liquid crystal layer, 5 light shielding layer, 8 seal member, 9 resin layer, 10 liquid crystal display panel, 11 liquid crystal display panel with microlens, 12 light source, 13 light guide plate, 14 reflector plate, 15 backlight device, 20 liquid crystal display device, 81, 82, 83, 84 directions (of light irradiation).

BEST MODES FOR CARRYING OUT THE INVENTION

The inventors first invented a process for producing a liquid crystal display panel with microlens (hereinafter referred to as a "prior invention") in which applied photo-sensitive material is exposed through a color filter to form a microlens having a cylindrical shape (also referred to as a "cylindrical microlens"). In the prior invention, the cylindrical microlens can be formed by exposing a photo-curing resin layer to form an appropriate distribution of cure degrees, using exposing irradiating light that passes through at least one color filter, and by removing uncured portions after exposure. Here, the distribution of cure degrees may be realized by adjusting distribution of light amount (light orientation distribution and/or irradiation time).

Though the process for producing liquid crystal display panel with microlens based on the prior invention realizes ideal lens shape in a transmissive liquid crystal display panel of which glass substrate has precise, constant thickness, it is difficult to highly control the lens shape using an actual glass substrate. The reason is that there is variation in thickness in the actual glass substrate in its plane (variation in one substrate will be hereinafter referred to as "in-plane" variation) or variation in thickness from one glass substrate to another and, therefore, under the same exposure conditions, lens shape comes to have recesses and protrusions in the ridge direction of microlens, dependent on the thickness of glass substrate. The reason why recesses and protrusions result will be described in the following.

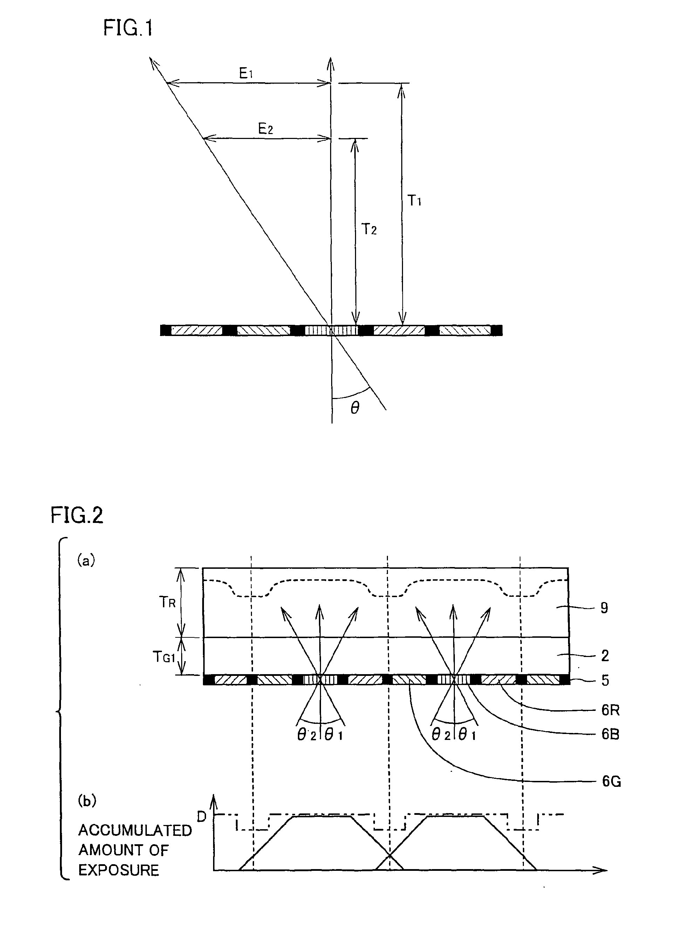

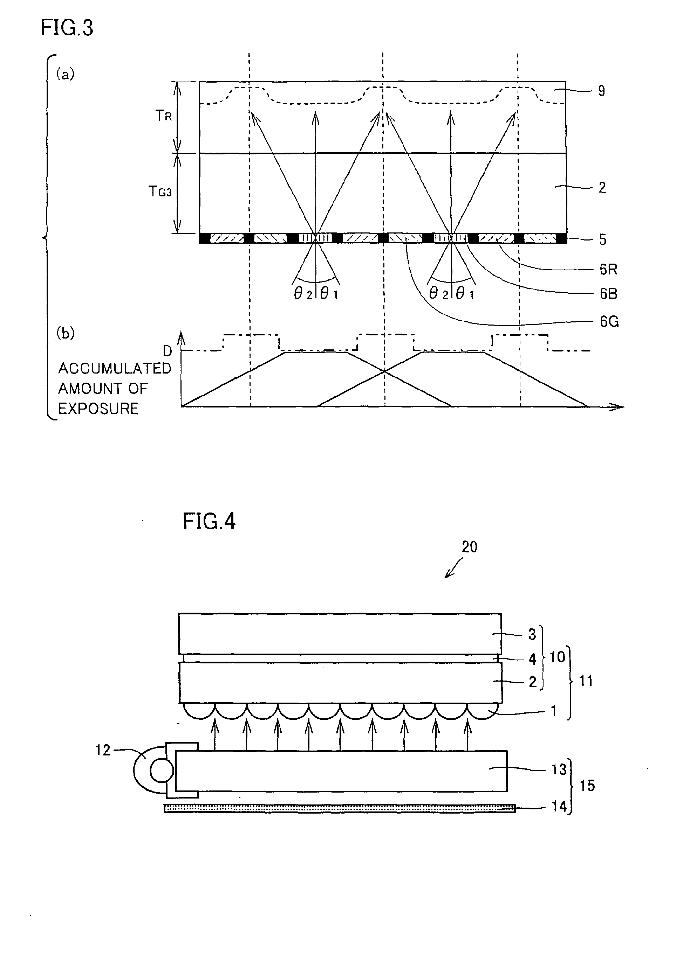

As schematically shown in Fig. 1, when glass substrate has large thickness $T_1$, the exposing irradiating light that has passed through a filter of high transmittance exposes a wide range $E_1$ of a photo-curing resin layer, and when it has small thickness $T_2$, the range of exposure becomes narrower to $E_2$. Therefore, as schematically shown in Figs. 2 (a), (b) and 3 (a), (b), total amount of exposure (hereinafter referred to as "accumulated amount of exposure") of a portion exposed by exposing irradiating light beams that have passed through filters of high transmittance provided respectively for two pixels next to each other differs from the intended amount of exposure, so that a protrusion results when the glass substrate is thick and a recess when it is thin. Particularly when a cylindrical microlens is to be formed, a protrusion or recess is undesirably formed at the top of the lens extending along the ridge, which should be flat. The recess and protrusion formed in the ridge direction of cylindrical microlens affect chromaticity of the transmissive liquid crystal display device.

A possible method of controlling recess and protrusion generated in the microlens may be appropriate optimization of exposure conditions with respect to the thickness of each glass substrate, so as to realize smooth, flat surface. With variation in thickness as large as several 10 μm even inside one glass substrate (a so-called "in-plane"), however, this means that exposure conditions must be changed panel by panel of transmissive liquid crystal display device. Still more, the variation in thickness increases in a large size liquid crystal display device. Therefore, production of microlens with exposure conditions optimized point by point would be troublesome and impractical. Further, dependent on a thickness of a substrate used as a reference for optimizing exposure conditions, not only protrusions but also recesses would result in other substrates.

In view of the foregoing, the present invention was made to improve the prior invention, and more specific object of the present invention is to form a microlens having a smooth, flat surface at the center of lens top, having the effect of enhancing front luminance, in a simple manner.

(Embodiment 1)

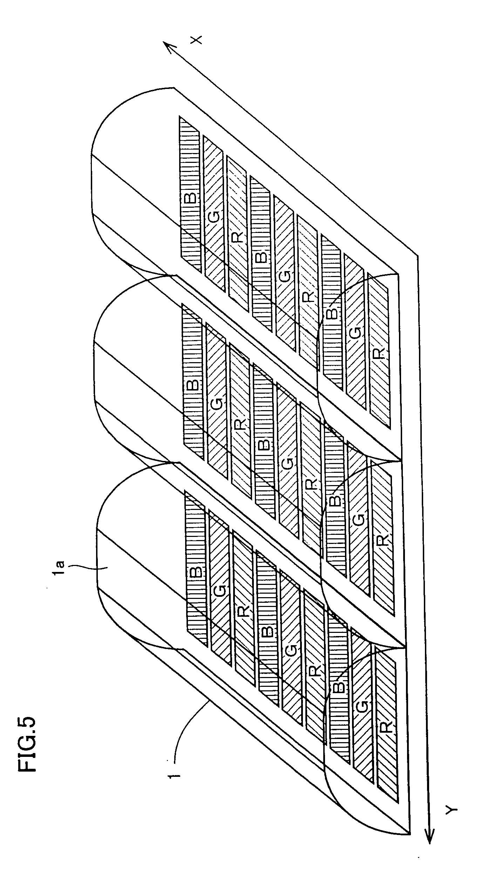

Referring to Figs. 4 and 5, the liquid crystal display panel with microlens in accordance with Embodiment 1 of the present invention will be described.

As shown in Fig. 4, a liquid crystal display device 20 includes a liquid crystal display panel 11 with microlens, having microlenses 1, and a backlight device 15 of high directivity arranged on the side of microlenses 1 of liquid crystal display panel 11 with microlens. Backlight device 15 includes a light source 12, a light guide plate 13 receiving light emitted from light source 12 and propagating the light threrein and emitting the light to liquid crystal display panel 11, and a reflector plate 14 reflecting light emitted from a back surface of light guide plate 13 to light guide plate 13. In Fig. 1, only the main components are shown and a polarizing plate and the like provided in front of/behind the liquid crystal display panel 11 are not shown.

By way of example, a backlight device described in IDW '02 "Viewing Angle Control using Optical Microstructures on Light-Guide Plate for Illumination System of Mobile Transmissive LCD Module", K. KALANTAR, pp. 549-552, Japanese Patent Laying-Open No. 2003-35824, M. Shinohara et al.: Optical Society of American Annual Meeting Conference Program, Vol. 10, p. 189 (1998), or Japanese Patent National Publication No. 8-511129 may be available as backlight device 15 suitably used in the liquid crystal display device.

Liquid crystal display panel 11 with microlens included in liquid crystal display device 20 includes: a liquid crystal layer 4; a TFT substrate 2 and a counter substrate 3 as first and second transparent substrates adhered to each other with liquid crystal layer 4 interposed; and microlenses 1 as cylindrical microlenses, formed by once forming a resin layer of photo-curing resin on a surface of TFT substrate 2 and by partially exposing and curing the same. A large number of microlenses 1 are arranged, to form a microlens array. The microlens array as a whole serves as a lenticular lens. Fig. 5 is a partial enlarged view of the microlens array. As shown in Fig. 5, microlens 1 has a flat surface 1a having two-dimensional expanse at the ridge portion. The flat surface 1a is the surface of resin layer left as it is, as the entire thickness of the resin layer is cured at the time of exposing the resin layer.

By liquid crystal display panel 11 with microlens in accordance with the present embodiment, even when the substrate used has thickness variation, a microlens having good flat surface free of any recess or protrusion can be formed accurately in a simple manner, by the producing process described below.

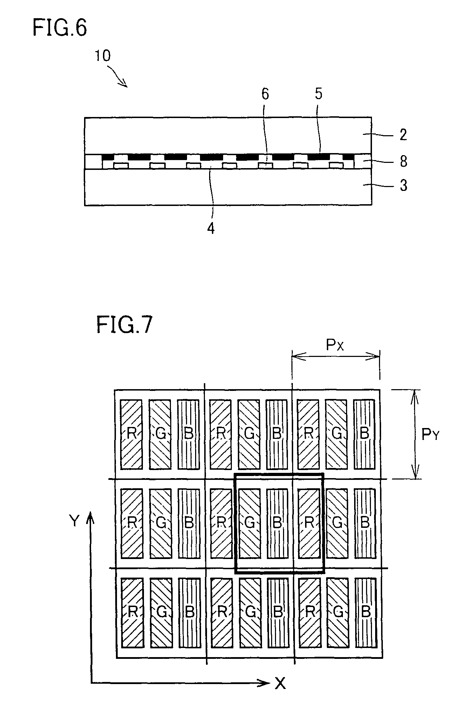

Referring to Figs. 6 to 9, the process for producing the liquid crystal display panel with microlens in accordance with Embodiment 1 of the present invention will be described.

First, as the "step of preparing a liquid crystal display panel," a liquid crystal display panel 10 is prepared as shown in Fig. 6. Liquid crystal display panel 10 is a color liquid crystal display panel, including TFT substrate 2 and counter substrate 3 having a color filter 6 formed thereon. As color filter 6, actually there are color filters corresponding to three colors, that is, R, G and B (red, green, blue). For convenience of description, in Fig. 6, the color filters are not distinguished but simply shown as color filter 6.

Between TFT substrate 2 and counter substrate 3, a prescribed liquid crystal layer 4 is formed, surrounded by seal member 8. On the side of liquid crystal layer 4 of TFT substrate 2, sub-pixel electrodes (not shown) provided corresponding to sub-pixels arranged in a matrix, TFT elements connected to sub-pixel electrodes (not shown), circuit elements such as gate bus lines and source bus lines (not shown) and light shielding layer 5 are formed. On the side of liquid crystal layer 4 of counter substrate 3, color filter 6 and a counter electrode (not shown) are formed. Further, on the surfaces of TFT substrate 2 and counter substrate 3 in contact with liquid crystal layer 4, an orientation film (not shown) is formed as needed.

Liquid crystal display panel 10 has a large number of pixels. Fig. 7 shows an area corresponding to 9 pixels of $3 \times 3$ among the number of pixels. The plurality of pixels are arranged in a matrix with X direction being a "row" and Y direction being a "column". The matrix has equal pitch of $P_X$ and $P_Y$ in the X and Y directions. In an active-matrix type display panel with TFT elements, typically, the row direction (X direction) is parallel to the gate bus line, and the column direction (Y direction) is parallel to the source bus line (video line).

Each pixel consists of three sub-pixels corresponding to three colors of R, G and B (red, green, blue), that is, R sub-pixel, G sub-pixel and B sub-pixel.

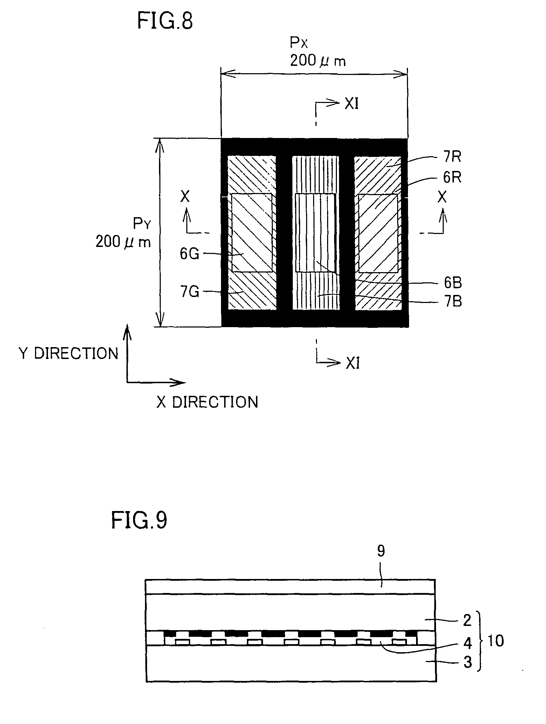

Fig. 8 shows the portion surrounded by a thick line in Fig. 7, extracted and enlarged. The frame of thick line in Fig. 7 is shifted by 1 sub-pixel from the area corresponding to one pixel. However, the area is equal to one pixel as it includes three sub-pixels and, when considering scanning at the time of exposure, it can be regarded as corresponding to one pixel. Such an area defined by a group of G, B and R arranged exceeding the boundary of regular pixels will be referred to as an "exposure pixel." The image plane of liquid crystal display panel 10 may be considered as a matrix of a large number of pixels and, at the same time, a matrix of a large number of exposure pixels. When the image plane as a whole is considered to be a matrix of exposure pixels, sub-pixels not belonging to any quasi-sub-pixel remain at the left and right ends of the image plane. The influence of sub-pixel smaller than one pixel at the peripheral portion is very small and negligible to the image plane on the whole.

As shown in Fig. 8, one exposure pixel includes three sub-pixels of G sub-pixel, B sub-pixel and R sub-pixel, and at each sub-pixel, color filter 6 is of the corresponding color. Around each sub-pixel, a light shielding layer (also referred to as "black matrix" or "light shielding area") 5 is provided. Further, each sub-pixel is divided into a reflecting portion and a transmitting portion. G sub-pixel consists of a reflecting portion 7G and transmitting portion 6G, B sub-pixel consists of a reflecting portion 7B and transmitting portion 6B, and R sub-pixel consists of a reflecting portion 7R and a transmitting portion 6R. As shown in Fig. 8, similar to the regular pixel, the exposure pixel also consists of an arrangement of three sub-pixels, and therefore, the pitch in X direction is $P_X$ and the pitch in Y direction is $P_Y$ in the exposure pixel. In the present embodiment, both $P_X$ and $P_Y$ are 200 $\mu$m. The dimension is only by way of example, and the length may be different.

Liquid crystal display panel 10 includes TFT substrate 2 and counter substrate 3 as first and second transparent substrates adhered to each other with liquid crystal layer 4 interposed, and a plurality of pixels allowing transmission of light are separated and defined by light shielding portion 5. Each of the plurality of pixels includes a plurality of sub-pixels including a first sub-pixel allowing passage of a first color light and a second sub-pixel allowing passage of a second color light different from the first color light. Among the plurality of sub-pixels, the first sub-pixel has highest transmittance of that light which has the property of curing photo-sensitive resin. Here, the "plurality of sub-pixels" refer to three sub-pixels of R, G and B, and the first sub-pixel corresponds to the B sub-pixel. The second sub-pixel corresponds to G or R sub-pixel.

Preferably, the first sub-pixel is that one among the "plurality of sub-pixels" which transmits light having the shortest central wavelength. The light having the property of curing photo-curing resin has short wavelength and, to provide a sub-pixel having the highest transmittance of such light, it is convenient to have the sub-pixel which transmits light having shortest central wavelength among the "plurality of sub-pixels" as the first sub-pixel.

In the present embodiment, the arrangement of sub-pixels in one pixel is R, G and B and, therefore, a concept of exposure pixel is introduced to perform exposure using an arrangement of G, B and R with B sub-pixel being the center as one unit. If the arrangement of sub-pixels in one pixel is R, B, G or G, B, R, then scanning for exposure is possible pixel by pixel without the necessity of introducing the concept of exposure pixel, and sub-pixels are not left at the ends of image plane. Therefore, such arrangement is more preferable.

Next, as the step of forming a resin layer, uncured photo-curing resin is applied to TFT substrate 2 of the liquid crystal display panel, as shown in Fig. 9, to form a resin layer 9 having the thickness $T_R$. Here, photo-curing resin sensitive to the light in the wavelength range of 380 nm to 420 nm is used. In order to improve adhesion between resin layer 9 and TFT substrate 2, surface modification such as application of silane coupling agent to a glass surface of TFT substrate, is preferably performed before applying the photo-curing resin. The photo-curing resin used here may include acrylic monomer such as urethane acrylate, epoxy acrylate, polyester acrylate and polyether acrylate, or a mixed composition such as a mixture of epoxy-based monomer and photo-initiator.

Next, the step of exposure is performed, in which the resin layer is partially cured. In the following, contents of exposure process will be described. Here, an example will be described in which the photo-curing resin is cured by the light transmitted through B sub-pixel. When resin layer 9 is irradiated with exposing irradiating light, the photo-curing resin of resin layer 9 senses the light and is cured. Here, the "exposing irradiating light" refers to light having the property of curing resin layer 9 and, by way of example, it may be ultraviolet ray.

With time of irradiation kept constant, the photo-curing resin of resin layer 9 is cured in accordance with light orientation distribution. Specifically, there is formed a distribution of cure degrees. Accordingly, by adjusting distribution of light amount (light orientation distribution and/or irradiation time), distribution of cure degrees can be formed in resin layer 9. Here, the "light orientation distribution" means intensity distribution of exposure light incident on the display panel, with respect to an angle (incident angle) formed with the normal of the display panel plane. The incident angle to B sub-pixel is in one-to-one correspondence with the incident position to the photosensitive material layer, that is, resin layer 9.

At this step, the plurality of pixels are irradiated and scanned by the exposing irradiating light with the incident angle varied, and resin layer 9 is partially cured.

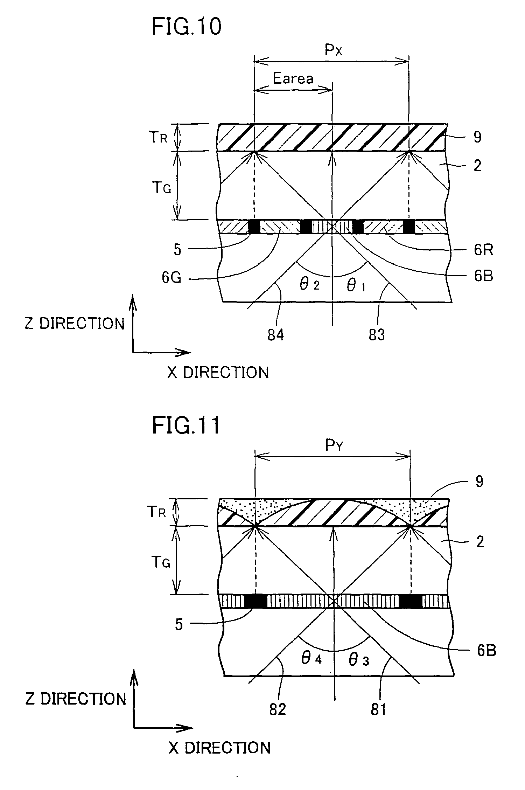

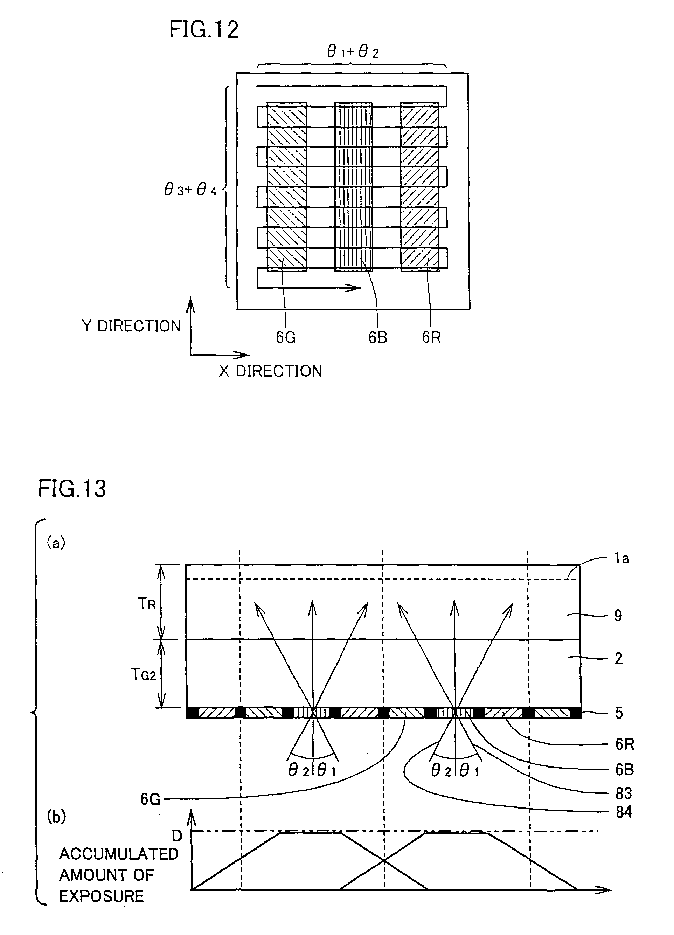

The scanning will be described with reference to Figs. 10 to 12. Fig. 10 is a cross-sectional view taken along the line X-X of Fig. 8, and Fig. 11 is a cross-sectional view taken along the line XI-XI of Fig. 8. Irradiation is performed with the light having the property of curing resin layer 9 fixed in a direction 81 of incident angle $\theta_3$ with respect to the Y direction shown in Fig. 11 and changed continuously or stepwise from the direction 83 of incident angle $\theta_1$ to the direction 84 of incident angle $\theta_2$ with respect to the X direction as shown in Fig. 10. When scanning of one way finishes in this manner, irradiation is performed with the incident angle in the Y direction of Fig. 11 set to a new angle slightly shifted from $\theta_3$ and changed in the similar manner from the direction 84 to the direction 83 in the X direction. Thus, reciprocated scanning is finished. Irradiation is further continued with the incident angle in the Y direction shifted slightly and again changed in the similar manner from the direction 84 to the direction 83 in the X direction. By the repetition of this operation, the entire area in which three sub-pixels are arranged in one pixel shown in Fig. 8 is scanned, covered two-dimensionally. The manner of scanning in schematic illustration is as shown in Fig. 12.

The step of curing is performed such that the cured portion comes to have the shape of a cylindrical microlens and the maximum thickness of cured portion becomes equal to the afore-mentioned thickness $T_R$. Dependent on the characteristic of color filters, exposing irradiating light may possibly leak from R sub-pixel or G sub-pixel to be sensed by the photo-curing resin. The microlens having a desired shape may be formed by performing exposure in consideration of the light amount of possible leakage.

The principle of forming the linearly continuous ridge shape of microlens by such scanning will be described with reference to Figs. 13 (a) and (b), where preferable state of exposure is realized. Assume that parallel light beams are used as the exposing irradiating light, and the incident angle of illumination light is changed from the direction 83 to the direction 84 at a constant angular velocity. Thickness of the transparent substrate of TFT substrate 2 is given as $T_{G2}$. Though an area corresponding to two pixels are shown in Fig. 13(a), the incident angle of irradiating light changes in the same manner on each pixel, as the irradiating light is provided as parallel light beams. Here, the irradiating light that has passed through B sub-pixel having high transmittance changes its direction and eventually exposes resin layer 9 positioned above G sub-pixel and R sub-pixel of lower transmittance. Distribution of exposure light amount at various points on resin layer 9 irradiated with illuminating light is as shown in Fig. 13(b).

When we look at one certain pixel, the distribution of exposure light amount is represented by a trapezoid with the maximum amount of exposure D as shown in Fig. 13(b), if exposure only by the irradiating light passed through the B sub-pixel of the pixel of interest is considered. The bottom portions of the trapezoidal distribution of exposure light generated by the irradiating light transmitted through B sub-pixels of pixels positioned on opposite sides of the pixel of interest overlap with each other. When the accumulated amount of exposure of the overlapping portion is adjusted to be equal to the maximum amount of exposure of non-overlapping portion, the total amount of exposure come to be D at any point. As a result, a flat surface is formed.

By the exposure with such a distribution, referring to Fig. 13(a), each point of resin layer 9 formed to have a constant thickness $T_R$ is cured only to a prescribed thickness from the bottom in the thickness direction. Specifically, the portion lower than the dotted line shown in resin layer 9 of Fig. 13(a) is cured. In this manner, the linear shape of the ridge of microlens results.

If the thickness of transparent substrate is $T_{G1}$ smaller than $T_{G2}$ as shown in Fig. 2(a), the range of exposure on the upper surface of transparent substrate becomes narrower because of the principle described with reference to Fig. 1, and the trapezoid representing the distribution of amount of exposure comes to have a shape with shorter lateral expansion such as shown in Fig. 2(b). Therefore, the accumulated amount of exposure D at the portion where bottoms of trapezoids overlap becomes insufficient and smaller than the amount of exposure at the top of trapezoid. Consequently, the amount of exposure becomes too small at the border between pixels as indicated by chain-dotted line in Fig. 2(b), and when viewed in the ridge direction of microlens, D comes to have a distribution not constant but increasing and decreasing repeatedly. As a result, the ridge formed by the cured resin comes to have recesses and protrusions as indicated by the dotted line in Fig. 2(a).

On the contrary, if the thickness of transparent substrate is $T_{G3}$ larger than $T_{G2}$ as shown in Fig. 3(a), the range of exposure on the upper surface of transparent substrate becomes wider because of the principle described with reference to Fig. 1, and the trapezoid representing the distribution of amount of exposure comes to have a shape with longer lateral expansion such as shown in Fig. 3(b). Therefore, the accumulated amount of exposure D at the portion where bottoms of trapezoids overlap becomes excessive, and overlap comes closer to the top of the trapezoid. Consequently, the amount of exposure becomes too large at the border between pixels as indicated by chain-dotted line in Fig. 3(b), and when viewed in the ridge direction of microlens, D comes to have a distribution not constant but increasing and decreasing repeatedly. As a result, the ridge formed by the cured resin comes to have recesses and protrusions as indicated by the dotted line in Fig. 3(a).

Here, the relation between the thickness of glass substrate as the transparent substrate and the range of exposure will be described using equations, with reference to Fig. 10. When we represent the thickness of glass substrate as $T_G$, incident angle at the time of exposure in Fig. 10 as $\theta_1$, index of refraction as n and, for convenience, the width of exposure range as $E_{area}$, the following relation holds.

$$E_{area} = T_G/n \times \tan\theta_1 \ldots \text{Equation 1}$$

Therefore, assuming that the irradiating light enters at the same angle $\theta_1$, the range of exposure $E_{area}$ becomes wider if the glass is thicker and the range of exposure $E_{area}$ becomes narrower if the glass is thinner. As a result, above a color filter having low transmittance of irradiating light, the amount of overlap of the irradiating light that has passed through the color filter having high transmittance differs. Specifically, the accumulated amount of exposure comes to be different. As a result, when viewed at least in the ridge direction, flat surface 1a of the formed microlens comes to have recesses and protrusions.

Considering the relation between the thickness $T_G$ of glass substrate and the range of exposure $E_{area}$ described

above, when the range of exposure $E_{area}$ becomes 1/2 times the pixel pitch $P_X$, the accumulated amount of exposure becomes constant as shown in Fig. 13(b) and, as a result, a flat surface 1a not having any recess or protrusion on the ridge is formed as indicated by the dotted line in Fig. 13(a). By inputting the equation:

$$E_{area} = (1/2)P_X \ldots \text{Equation 2}$$

to Equation 1, we obtain

$$(1/2)P_X = T_G/n \times \tan\theta_1 \ldots \text{Equation 3.}$$

Though a flat surface free of any recess or protrusion in the ridge direction is preferably formed in Figs. 13(a) and (b), the portion only to a prescribed thickness from the bottom is cured in resin layer 9 formed to have the thickness $T_R$, and upper portion would be left uncured and eventually disposed. Further, actually the thickness of glass substrate varies.

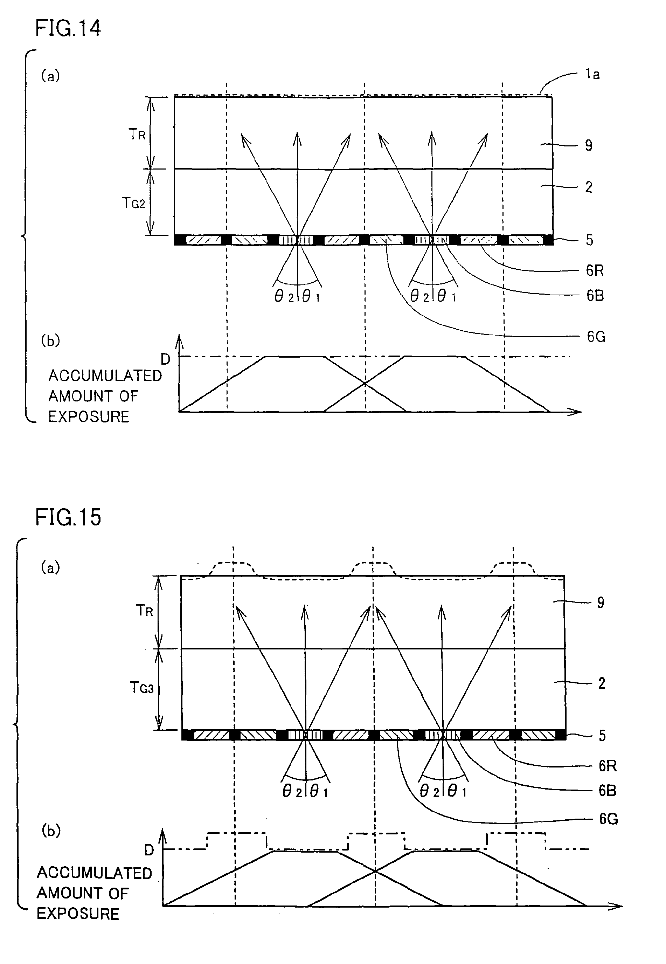

In view of the foregoing, an example of mass-production of microlenses by applying prescribed exposure and scanning conditions to a large number of glass substrates with thickness variation will be described with reference to Figs. 14 (a) and (b).

Exposure conditions that satisfy the relation of Equation 3 and under which the accumulated amount of exposure forming the flat surface in the ridge direction of microlens becomes equal to the amount of exposure $D_T$ necessary to expose photo-curing resin having the thickness $T_R$ are set as "optimal exposure conditions." Figs. 14(a) and (b) show a state in which thickness of the portion of resin layer 9 cured by exposure is the same as thickness $T_R$ of resin layer 9. The optimal exposure conditions enable such unwasteful curing.

When we represent the amount of exposure with the exposing irradiating light entering at the incident angle $\theta_1$ as $D_{theta1}$ and the amount of exposure with the exposing irradiating light entering at the incident angle $\theta_2$ as $D_{theta2}$, the optimal exposure conditions would be

$$DT = D_{theta1} + D_{theta2} \ldots \text{Equation 4.}$$

As the thickness $T_G$ of the glass plate used for determining optimal exposure conditions, the thinnest value in the plane of glass substrate or the minimum value of thickness variation among glass substrates is used, as the "reference glass substrate thickness." In Figs. 13(a), (b) and 14(a), (b), $T_G = T_{G2}$. In the example of liquid crystal display panel shown in Fig. 7, the pixel pitch $P_X$ in the row direction (the direction of arrangement of R, G and B color filters belonging to one pixel) is 200 $\mu$m, the pixel pitch $P_Y$ in the column direction perpendicular to the row direction is 200 $\mu$m, and index of refraction of the transparent substrate portion of TFT substrate 2 is 1.52. Assuming that the reference glass substrate thickness is 400 $\mu$m, the incident angle satisfying the optimal exposure conditions is

$$\theta_1 = \theta_2 = \tan^{-1}\{(1/2)P_X/(T_G/n)\}$$

$$= \tan^{-1}\{(1/2) \times 200/(400/1.52)\}$$

$$= \tan^{-1}(100/260) = \text{approximately } 21°.$$

When resin layer 9 of photo-curing resin is subjected to photo-sensing process using the optimal exposure conditions corresponding to the reference glass substrate thickness, the thickness of other glass substrates or thickness of other portions of the same glass substrate is always thicker than the reference glass substrate. Therefore, only the protrusions such as shown in Figs. 15(a) and (b) would result in the ridge direction of the microlens, and recesses are not formed. Further, as the protrusion that is to be generated exceeds the thickness of resin layer 9, a state with the protrusion cut-out, can be attained as a result. Thus, even when glass substrate thickness varies, a microlens array having flat, smooth surface can be produced under the same exposure conditions.

The light orientation distribution may be adjusted by changing the incident angle of the exposing irradiating light as described by way of example above and, as another method, the distribution of irradiation time may be adjusted by translating the beam of exposing irradiating light relative to resin layer 9, or these may be combined. As a still another method, a photomask having a prescribed distribution of transmittance may be used to adjust the light orientation distribution.

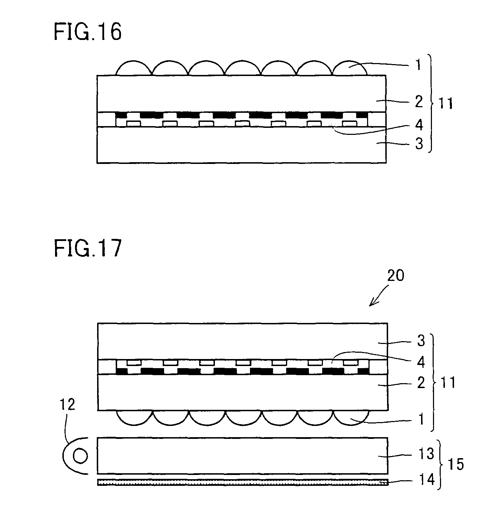

Next, as shown in Fig. 16, the step of development for removing uncured portion of resin layer 9 (see Fig. 9) is performed. As a result of removing the uncured portion, only the cured portions remain. Thus, microlens 1 of which shape corresponds to the distribution of cure degrees can be obtained. In this manner, liquid crystal display panel 11 with microlens is obtained. The microlens array provided on liquid crystal display panel 11 with microlens is a lenticular lens arranged in correspondence with columns of a plurality of pixels. The microlens array is arranged to have the ridges aligned in the row direction (X direction), and it has light collecting power in the column direction (Y direction) but not in the row direction (X direction).

It is preferred, after the development step, to again irradiate the microlens 1 formed by curing the photo-curing resin with the exposing irradiating light, so that curing of photo-curing resin is further promoted to a fully cured state. Further, thermal curing may be performed in addition to photo-curing.

Thereafter, as shown in Fig. 17, liquid crystal display panel 11 with microlens is combined with backlight device 15, whereby liquid crystal display device 20 is completed. Backlight device 15 may be fabricated beforehand by assembling light source 12, backlight 13 and reflector plate 14.

Though a liquid crystal display panel having color filters has been described in the embodiment above, application of the present invention is not limited thereto. By way of example, the present invention is similarly applicable to a display device such as a guest-host liquid crystal display device in which color display is provided by using pigments mixed in a display medium layer (liquid crystal layer). Further, the invention is applicable not only to the liquid crystal display panel but also to other non-spontaneous emission type display panel (such as electro-chromic display panel, an electrophoretic display panel, a toner display panel and a PLZT panel).

The embodiments as have been described here are mere examples and should not be interpreted as restrictive. The scope of the present invention is determined by each of the claims with appropriate consideration of the written description of the embodiments and embraces modifications within the meaning of, and equivalent to, the languages in the claims.

## Claims

1.   A process for producing a liquid crystal display panel with microlens, comprising:

the step of preparing a liquid crystal display panel (10) including first and second transparent substrates (2, 3) adhered to each other with a liquid crystal layer (4) interposed, having a plurality of pixels allowing passage of light and defined by separation by a light shielding portion (5), each of said plurality of pixels including a plurality of sub-pixels including a first sub-pixel passing light of a first color, and a second sub-pixel passing light of a second color different from the first color, said first sub-pixel having highest transmittance of light that has a property of curing a photo-curing resin among said plurality of sub-pixels;
the step of forming a resin layer (9) of uncured said photo-curing resin, on a surface of said first transparent substrate;
the exposure step of irradiating said plurality of pixels with light having the property of curing said resin layer (9) with varying incident angle, and partially exposing said resin layer (9) by the light passed through said first sub-pixel; and
the step of development following the exposure step, of removing an uncured portion of said resin layer (9); wherein
said exposure step is performed such that the cured portion has a shape of cylindrical microlens, and maximum thickness of the cured portion becomes equal to thickness of said resin layer.

2.   The process for producing a liquid crystal display panel according to claim 1, wherein
said first sub-pixel is that one among said plurality of sub-pixels which transmits light having the shortest central wavelength.

3.   The process for producing a liquid crystal display panel according to claim 1, comprising the step of:

determining exposure scanning conditions in microlens ridge direction as light irradiation conditions for scanning, in order to expose ridge direction of said cylindrical microlens, using as a reference thinnest of in-plane thickness variation of said first transparent substrate or thinnest thickness of variation among samples.

4. The process for producing a liquid crystal display panel according to claim 3, wherein
said exposure scanning conditions in microlens ridge direction are determined such that the relation

$$1/2 \cdot P_X = T_G/n \times \tan\theta_1$$

is satisfied and accumulated amount of exposure of a portion corresponding to a ridge of said cylindrical microlens becomes equal to an amount of exposure necessary for exposing said photo-curing resin of the thickness of said resin layer.

5. A liquid crystal display panel with microlens, comprising:

a liquid crystal layer (4);
first and second transparent substrates (2, 3) adhered to each other with said liquid crystal layer (4) interposed; and
a cylindrical microlens (1) formed by once forming a resin layer of photo-curing resin on a surface of said first transparent substrate (2) and by partially exposing and curing; wherein
said cylindrical microlens (1) has a flat surface (1a) extending two-dimensionally at a ridge portion, said flat surface (1a) being a surface of said resin layer left as it is, as said resin layer is cured to full thickness when said resin layer is exposed.

FIG.1

FIG.2

(a)

(b)
ACCUMULATED
AMOUNT OF
EXPOSURE

## FIG.3

(a)

$T_R$

$T_{G3}$

9

2

5

6R

6B

6G

$\theta_2$ $\theta_1$   $\theta_2$ $\theta_1$

(b)

D

ACCUMULATED
AMOUNT OF
EXPOSURE

## FIG.4

20

3
4
2
1

10

11

12

13
14

15

FIG.5

FIG.6

FIG.7

FIG.8

Px
200 μm

XI

7R
6R

X                              X

6G

7G

6B
7B

XI

Y DIRECTION

X DIRECTION

FIG.9

9

2
10
4
3

FIG.10

Z DIRECTION

X DIRECTION

FIG.11

Z DIRECTION

X DIRECTION

FIG.12

$\theta_1 + \theta_2$

$\theta_3 + \theta_4$

Y DIRECTION

X DIRECTION

6G　　　6B　6R

FIG.13

(a)

1a

$T_R$

9

2

$T_{G2}$

5

6R

6B

83

84

$\theta_2$ $\theta_1$　　$\theta_2$ $\theta_1$

6G

(b)

D

ACCUMULATED
AMOUNT OF
EXPOSURE

## FIG.14

(a)

(b)

ACCUMULATED
AMOUNT OF
EXPOSURE

## FIG.15

(a)

(b)

ACCUMULATED
AMOUNT OF
EXPOSURE

## FIG.16

## FIG.17

## INTERNATIONAL SEARCH REPORT

| | International application No. |
|---|---|
| | PCT/JP2006/313585 |

**A. CLASSIFICATION OF SUBJECT MATTER**
*G02F1/1335*(2006.01)i, *G02B3/00*(2006.01)i, *G02B3/06*(2006.01)i, *G09F9/00*
(2006.01)i

According to International Patent Classification (IPC) or to both national classification and IPC

**B. FIELDS SEARCHED**

Minimum documentation searched (classification system followed by classification symbols)
G02F1/1335, G02B3/00, G02B3/06, G09F9/00

Documentation searched other than minimum documentation to the extent that such documents are included in the fields searched
Jitsuyo Shinan Koho          1922-1996   Jitsuyo Shinan Toroku Koho   1996-2006
Kokai Jitsuyo Shinan Koho    1971-2006   Toroku Jitsuyo Shinan Koho   1994-2006

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 5-19244 A  (Fujitsu Ltd.),<br>29 January, 1993 (29.01.93),<br>Par. Nos. [0006] to [0008], [0021] to [0022];<br>Fig. 1<br>(Family: none) | 1-2,5<br>3-4 |
| Y<br>A | JP 9-49925 A  (Sekisui Chemical Co., Ltd.),<br>18 February, 1997 (18.02.97),<br>Par. No. [0029]; Fig. 1<br>(Family: none) | 1-2,5<br>3-4 |
| Y<br>A | JP 2002-62818 A  (Sony Corp.),<br>28 February, 2002 (28.02.02),<br>Figs. 3 to 4<br>& US 2002/0080323 A1 | 1-2<br>3-4 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 03 August, 2006 (03.08.06) | 29 August, 2006 (29.08.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

| International application No. |
| --- |
| PCT/JP2006/313585 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y<br>A | JP 5-24121 A  (Hitachi, Ltd.),<br>02 February, 1993 (02.02.93),<br>Par. Nos. [0013], [0048]<br>(Family: none) | 1-2<br>3-4 |
| P,X | JP 2005-275142 A  (Sharp Corp.),<br>06 October, 2005 (06.10.05),<br>& WO 2005/093500 A1 | 1-2,5 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002062818 A
- JP 2003035824 A
- JP 8511129 A

**Non-patent literature cited in the description**

- **K. KALANTAR.** Viewing Angle Control using Optical Microstructures on Light-Guide Plate for Illumination System of Mobile Transmissive LCD Module. *IDW '02,* 549-552
- **M. SHINOHARA et al.** *Optical Society of American Annual Meeting Conference Program,* 1998, vol. 10, 189